# EUROPEAN PATENT APPLICATION

(11) **EP 1 780 240 A1**
(43) Date of publication of application: **02.05.2007**
(21) Application number: 05023332.9
(22) Date of filing: 26.10.2005
(51) Int. Cl.: C08L 67/08, C09D 167/08, C08F 283/06, C08F 283/00, C08L 51/08, C09D 151/08, C08G 18/18

(54) **Waterborne thixotropic resin systems**

(71) Applicant: Cytec Surface Specialties Austria GmbH, 8402 Werndorf (AT)
(72) Inventor: Urbano, Edmund, Dr.,, 8044 Graz (AT); Gobec, Michaël, Dr., 8010 Graz (AT); Grimm, Martin, 8062 Kumberg (AT)
(74) Representative: Deckers, Hellmuth Alexander

(57) **Abstract**

A thixotropy agent for use in water borne resins compositions which comprises moieties derived from olefinically unsaturated monohydroxy compounds, polyfunctional isocyanates, aliphatic polyether polyols, aliphatic polyamines, and optionally, saturated aliphatic monohydroxy compounds, a process for their production, and a method of use thereof as modifier in waterborne resin systems

## Description

This invention relates to waterborne thixotropic resin systems, a process for their production, and a method of use thereof.

Waterborne thixotropic alkyd resins systems have been described, i. a. in EP 1 264 861 A2. These comprise a thixotropy agent which is made by reacting a polyfunctional aliphatic isocyanate and an olefinically unsaturated aliphatic hydroxy compound to form an olefinically unsaturated monoisocyanate which in turn is reacted with ammonia or an amine having at least one primary amino group.

In the experiments underlying the present invention, it has been found that the amount of such thixotropy agent introduced into a waterborne alkyd resin system is limited by the storage stability of such modified resins, crystallisation occurring when the mass fraction of thixotropy agent with regard to the total mass of solids in the said system exceeds about 3 %. On the other hand, this limitation in storage stability did not allow to increase the level of thixotropy to the extent desired. This limitation in storage stability is particularly relevant for the application in alkyd resins.

The problem to be solved was therefore to improve the storage stability and thereby increase the tolerance of the resin system towards a higher level of thixotropy modification.

This object is achieved by providing a novel thixotropy agent B which is an olefinically unsaturated hydrophilic urethane modified urea comprising moieties derived from
- **B1**: olefinically unsaturated monohydroxy compounds,
- **B2**: polyfunctional isocyanates,
- **B3**: aliphatic polyether polyols,
- **B4**: aliphatic polyamines, and optionally,
- **B5**: saturated aliphatic monohydroxy compounds.

In these thixotropy agents, the components **B2** and **B3** are preferably reacted in a way that at least two of the hydroxy groups of **B3** are consumed by addition to an isocyanate group of **B2** to form urethane bonds.

The thixotropy agents **B** may be obtained by reaction of component **B1** or of a mixture of the components **B1** and **B5** with a stoichiometric excess of the isocyanate component **B2,** whereupon component **B3** is added to the reaction mixture, or by first reacting **B3** and **B2,** and thereafter adding **B1,** optionally in mixture with **B5,** or by charging **B2,** and adding, in sequence, or in mixture, components **B1, B3,** and **B5.**

This reaction mixture produced in either way is then added to the amine component, **B4,** which is either charged as a solution in a solvent which is inert towards isocyanate groups, or preferably charged in the form of an admixture of **B4** to a resin A emulsified in water. Due to the higher affinity of isocyanate groups towards amine groups than to water or hydroxyl groups in the resin **A**, formation of a urea compound is the predominant reaction in this process.

Particularly good results have been obtained by using the compounds **B1** to **B5** in the following quantities:
- the ratio of the amount of substance of amino groups in **B4** to the amount of substance of isocyanate groups in **B2** is from 0.3 mol/mol to 0.7 mol/mol, preferably from 0.35 mol/mol to 0.65 mol/mol, and particularlypreferred from 0.4 mol/mol to 0.6 mol/mol,
- the ratio of the amount of substance of hydroxyl groups in **B3** to the amount of substance of isocyanate groups in **B2** is from 0.2 mol/mol to 0.4 mol/mol, preferably from 0.22 mol/mol to 0.38 mol/mol,
- the ratio of the amount of substance of hydroxyl groups in **B1** to the amount of substance of isocyanate groups in **B2** is from 0.05 mol/mol to 0.30 mol/mol, preferably from 0.1 mol/mol to 0.25 mol/mol,
- the amount of substance of isocyanate groups in **B2** is from 0.5 to 5 times that of the amount of substance of hydroxyl groups in **B3,** preferably this ratio is from 0.7 to 4.5, and especially preferred, from 0.9 to 4.

A further object of this invention is a method of use of such thixotropy agents B in aqueous compositions comprising resins **A**, especially those that comprise alkyd resins **A1**, which method comprises the steps of
- preparation of an isocyanate functional intermediate by reacting hydroxy functional components **B1, B3,** and optionally, **B5,** with a stoichiometric excess of a polyfunctional isocyanate, **B2,**
- adding this isocyanate functional intermediate to a mixture comprising a polyamine, **B4,** and an aqueous dispersion of a resin **A** which preferably has olefinically un-saturated groups.

Such resins A are preferably selected from the group consisting of alkyd resins **A1**, acrylic resins **A2,** polyester resins **A3,** polyurethane resins **A4,** aminoplast resins **A5**, silicone resins **A6,** and epoxy resins **A7.** They can be made by reaction of oligomeric base resins with reactive olefinically unsaturated compounds that provide the reaction products with groups that take part in a radiation induced polymerisation reaction. Acrylic compounds such as acrylic acid itself, and derivatives thereof such as acrylamide, hydroxyethyl acrylate, and glycidyl acrylate are especially suitable for providing the said base resins with the property of being radiation curable.

Resins comprising olefinically unsaturated groups can also conventionally be air-drying, in particular air-drying alkyd resins **A1** which do not need the additional modification to impart olefinic unsaturation. The curing reaction of these can be accelerated in a known manner by adding siccatives, which are preferably organic salts of transition metals such as cobalt or manganese octoate. Particularly preferred alkyd resins are those alkyd resins based at least partly on fatty acids grafted with olefinically unsaturated acids such as acrylic or methacrylic acids which upon at least partial neutralisation with ammonia or an amine, render the alkyd resins water-dilutable without the need of adding external emulsifiers.

Preferred alkyd resins of this type have a Staudinger-Index *J*_{g} of from 6 cm³/g to 16 cm³/g, preferably of from 8 cm³/g to 14 cm³/g. Their acid value is preferably between 20 mg/g and 80 mg/g, particularly preferably between 30 mg/g and 60 mg/g.

The quantity formerly often referred to as "intrinsic viscosity", named "Staudinger-Index" *J*_{g} in accordance with DIN 1342, Part 2.4, is the limiting value of the Staudinger-Function *J*ᵥ with decreasing concentration and shear rate, wherein *J*ᵥ stands for the relative change in viscosity divided by the mass concentration β_{B} = *m* _{B} / *V* of the solute B (having a mass *m*_{B} in the volume V of the solution), according to the formula *Jᵥ =* (**η**ᵣ -1) /β_{B} . **η**ᵣ -1 is the relative change in viscosity, according to **η**ᵣ*-* 1 = (**η** *-* **η**ₛ) / **η**ₛ. The relative viscosity **η** ᵣis the ratio of the viscosity **η** of the solution under consideration, and the viscosity **η** ₛ of the pure solvent. The unit conventionally used for *J* is "cm³/g"; formerly often also "dl/g".

The acid value or acid number is defined, according to DIN EN ISO 2114 (formerly DIN 53 402), as the ratio of that mass ***m***_{KOH} of potassium hydroxide which is needed to neutralise the sample under examination, and the mass ***m***_{B} of this sample, or the mass of the solids in the sample in the case of a solution or dispersion; its customary unit is "mg/g".

The alkyd resins **A1** which are preferentially used in the context of this invention are made by a fusion process, where a conventional alkyd resin is reacted with grafted fatty acids at temperatures of from 160 °C to 230 °C.

The polycarboxylic acids **A11** or anhydrides thereof used in the synthesis of the preferred alkyd resins are selected from the group consisting of phthalic acid, phthalic anhydride, tetrahydrophthalic acid, trimellithic anhydride, pyromellithic anhydride, maleic anhydride, adipic acid, succinic acid, and among the olefinically unsaturated fatty acids **A12** and derivatives thereof, mention shall be made of linseed oil fatty acid, soybean oil fatty acid, sunflower oil fatty acid, safflower oil fatty acid, dehydrated castor oil oil fatty acid, cotton seed oil fatty acid, groundnut oil fatty acid, tung oil fatty acid, tall oil fatty acid, synthetic olefinically unsaturated C₁₂- to C₂₂-fatty acids and derivatives thereof made by conjugation, isomerisation or dimerisation of the said unsaturated fatty acids, and also aromatic or saturated aliphatic monocarboxylic acids such as benzoic acid, hydroxybenzoic acid, tert.-butyl benzoic acid, coconut oil fatty acid, and 2-ethyl hexanoic acid.

Suitable polyhydric alcohols **A13** used in the synthesis of the alkyd resins **A1** include those having from 1 to 6, and preferably from 2 to 4, hydroxyl groups per molecule, such as ethylene glycol, 1,2- and 1,3-propylene glycol, 1,2- and 1,4-butane diol, neopentyl glycol, 2-methyl-1,3-propane diol, cyclohexane dimethanol, 2-ethyl- 1,3-propane diol, 1,6-hexane diol, ether alcohols such as diethylene glycol and triethylene glycol, trimethylol ethane, trimethylol propane, glycerol, pentaerythritol, dipentaerythritol, mannitol and sorbitol.

The compounds **B1** to **B5** used in the synthesis of the thixotropy agent **B** are described hereinbelow.

The olefinically unsaturated monohydroxy compounds **B1** are aliphatic linear, or branched compounds having at least one olefinic unsaturation, and one hydroxy group. Preferably, the olefinically unsaturated group is easily accessible, which is the case with terminal or chain-pendant olefinically unsaturated groups. Suitable compounds are monoesters of olefinically unsaturated carboxylic acids, such as acrylic, methacrylic, crotonic, isocrotonic or vinyl acetic acids, with dihydroxy compounds such as ethylene and propylene glycol, 1,2- and 1,4-butylene glycol, or hexane 1,6-diol. Particularly preferred are hydroxyethyl and hydroxy propylacrylate. Also suited are unsaturated diesters of trihydroxy compounds, such as glycerol diacrylate, and trimethylol propane diacrylate, and esters of other polyvalent alcohols with olefinically unsaturated acids where one hydroxyl group remains unesterified. Other suitable compounds are ethers of olefinically unsaturated alcohols such as allyl or methallyl alcohol with polyethylene or polypropylene glycols, or of trimethylol propane.

The polyfunctional isocyanates **B2** are compounds having two or more isocyanate groups per molecule. Preferred are linear, branched or cyclic aliphatic isocyanates, particularly diisocyanates; mixtures of isocyanates (mono-, di-, tri- and higher functional isocyanates) can also be used, with the proviso that the average isocyanate functionality (the average number of isocyanate groups per molecule) shall be at least 1.8, and preferably at least 2.0. Examples for suitable linear polyfunctional isocyanates are 1,2-diisocyanato ethane, 1,3-diisocyanato propane, 1,4-diisocyanato butane, hexamethylene diisocyanate, 1,8-diisocyanato octane and 1,12-diisocyanato dodecane, as well as the dimeric and trimeric polyisocyanates (uretdiones and biurets) and allophanates and reaction products of polyfunctional linear isocyanates with diols; compounds having two isocyanate groups being preferred. It is also possible, but less preferred, to use short chain branched aliphatic alpha,omega-diisocyanates such as those substituted with one or more methyl groups, 1,5-diisocyanato-2-methyl pentane, and 2,2,4- or 2,4,4-trimethyl diisocyanato hexane being mentioned. Among the cycloaliphatic isocyanates, especially isophorone diisocyanate is mentioned.

The aliphatic polyether polyols **B3** can be diethylene glycol, triethylene glycol, and the higher oligomers, preferably up to a degree n of polymerisation of 100. It is also possible to use mixed polyether alcohols based on ethylene and propylene glycols, which may be random or block copolymers, likewise preferably with a degree *n* of polymerisation of up to 100.

The aliphatic polyamines **B4** are preferably diprimary aliphatic linear, branched or cyclic amines having from 2 to 40 carbon atoms, preferably from 4 to 12 carbon atoms, such as ethylene diamine, 1,3-diaminopropane, 1,4-diaminobutane, and 1,6-diaminohexane.

Among the saturated aliphatic monohydroxy compounds **B5,** which preferably have from 6 to 20 carbon atoms, mention shall be made of hexanol-1, 2-ethylhexanol-1, n-octanol, n-decanol, 2-decanol, 4-decanol, 1-dodecanol, 1-tetradecanol, 1-hexadecanol, 1-octadecanol, and iso-tridecanol. It is also possible to use the mixtures of aliphatic monohydroxy compounds made by reduction of mixtures of fatty acids, especially those made by reduction of mixtures of naturally occurring fatty acids.

The thixotropy agents of the present invention are preferably made in accordance with the following procedure:
in the first step, a mixture of **B1,** and **B3,** and optionally, **B5,** is prepared, wherein the composition of the mixture is such that in the sum of the amounts of substance of hydroxyl groups in **B1, B3,** and **B5,** the amount-of-substance fraction of hydroxyl groups of **B1** is from 0.25 mol/mol to 0.7 mol/mol, the amount-of-substance fraction of hydroxyl groups of **B3** is from 0.30 mol/mol to 0.75 mol/mol, and the amount-of-substance fraction of hydroxyl groups of **B5** is from 0 mol/mol to 0.3 mol/mol,
in the second step, this mixture is added to component **B2**, to form an isocyanate functional intermediate,
and in the third step, the aliphatic polyamines **B4** are reacted with this mixture.

In an alternative procedure,
in the first step, component **B1**, and optionally, component **B5**, to component **B2,** are reacted to form an addition product containing urethane groups,
to which, in the second step, component **B3** is added, under formation of an addition product containing urethane groups, wherein the amounts of **B1**, **B3,** and **B5** are chosen in a way that in the sum of the amounts of substance of hydroxyl groups in **B1, B3,** and **B5,** the amount-of-substance fraction of hydroxyl groups of **B1** is from 0.25 mol/mol to 0.7 mol/mol, the amount-of-substance fraction of hydroxyl groups of **B3** is from 0.30 mol/mol to 0.75 mol/mol, and the amount-of-substance fraction of hydroxyl groups of **B5** is from 0 mol/mol to 0.3 mol/mol, and,
in the third step, the aliphatic polyamines **B4** are reacted with the mixture of those reaction products formed in the second step.

In either of these procedures, the last step can preferably be conducted in the presence of an aqueous dispersion of a water-reducible resin selected from the group consisting of alkyd resins, acrylic resins, polyester resins, polyurethane resins, and epoxy resins.

In this preferred procedure, a mass fraction of between 50 % and 100 % of the resin to be modified, preferably in the form of an aqueous dispersion, is already present in the reaction of the polyamines **B4** with the isocyanate functional reaction products of the second step, the remainder of the resin being added to the mixture in the course of the reaction or thereafter.

In the reaction of the third step between the polyamines **B4** and the isocyanate functional intermediate formed in the first and second steps, the ratio of the amount of substance of amino groups to the amount of substance of isocyanate groups is preferably from about 0.7:1 to about 1.3:1, particularly preferred from about 0.9:1 to 1.1:1. Especially preferred are ranges exactly corresponding to these limits mentioned supra.

It has been found that addition of salts of metals such as tin, titanium, and zirconium significantly accelerate the formation of the thixotropy agents described herein.

The mass fraction of thixotropy agent comprised in the resin thus modified is preferably from 0.5 % to 25 %, particularly preferred from 1 % to 15 %. As usual, a mass fraction *W*_{B} denotes the ratio of the mass *m*_{B} of a component **B** to the sum ***m*** of masses of all components (solvents or dispersing agents such as water being excluded here) present in the mixture considered.

Particularly good results have been obtained if the content of unsaturated groups in the thixotropy agents, expressed as the ratio of the amount of substance of unsaturated groups in the said thixotropy agent to the mass of the said thixotropy agent, is from 0.2 mol/kg to 2 mol/kg, preferably from 0.4 mol/kg to 1.8 mol/kg, and particularly preferred, from 0.5 mol/kg to 1.7 mol/kg.

Furthermore, particularly good results have been obtained if the content of urethane type nitrogen atoms in the thixotropy agents, expressed as the ratio of the amount of substance of urethane type nitrogen atoms in the said thixotropy agent to the mass of the said thixotropy agent, is from 1.5 mol/kg to 5 mol/kg, preferably from 2 mol/kg to 4 mol/kg, and particularly preferred, from 2.5 mol/kg to 3.5 mol/kg.

Furthermore, particularly good results havebeen obtained if the content of urea type nitrogen atoms in the thixotropy agents, expressed as the ratio of the amount of substance of urea type nitrogen atoms in the said thixotropy agent to the mass of the said thixotropy agent, is from 1.5 mol/kg to 5 mol/kg, preferably from 2 mol/kg to 4 mol/kg, and particularly preferred, from 2.5 mol/kg to 3.5 mol/kg.

The compositions prepared in accordance with the present invention for use as coating compositions may also comprise at least one each of pigments, extenders, colourants, and additives selected from the group consisting of levelling agents, flow modifiers, antifoaming agents, wetting agents, antisettling agents, dispersing agents, antiskinning agents, siccatives, thickeners, catalysts, coalescing agents, adjuvants for film formation, and antifouling agents.

It is especially preferred to use the thixotropy agent in combination with alkyd resins.

Further customary additives, viz., antiskinning agents (methyl ethyl ketoxime and cyclohexanone oxime being mentioned as preferrred), especially in the case of alkyd resins, siccatives such as cobalt or manganese carboxylates, and biocides such as methyl isothiaolinone and derivatives thereof may also be used.

The invention is further illustrated by the following examples.

### Example 1 Isocyanate Functional Intermediates

As stated in table 1, the said educts or starting materials, viz., diisocyanates, 2-hydroxyethyl methacrylate, and the other hydroxy functional compounds were mixed using the mentioned amounts of substance:

**Table 1 Educts for the Isocyanate functional Intermediates 1a through 1e**

| Component (Amount of Substance in mol) | 1a | 1b | 1c | 1d | 1e |
|---|---|---|---|---|---|
| Hexamethylene Diisocyanate | 4 | 4 | | 2 | 6 |
| Hexamethylene Diisocyanate Dimer (Uretdione) | | | 4 | | |
| Isophorone Diisocyanate | | | | 2 | |
| 2-Hydroxyethyl Methacrylate | 1 | 2 | 1 | 2 | 2 |
| Isotridecyl Alcohol | 1 | | 1 | | |
| Triethylene Glycol | 1 | | | 1 | 1 |
| Polyethylene Glycol 600 * | | 1 | | | |
| Polypropylene Glycol 1000 * | | | 1 | | |
| Mass Fraction of Isocyanate Groups in %⁺ | 14.6 | 11.0 | 6.3 | 14.0 | 17.8 |

| | | | | | |
|---|---|---|---|---|---|
| *number average molar mass of 600 g/mol, or 1000 g/mol ⁺ determined according to DIN 53185 | | | | | |

The diisocyanates were charged to the reaction vessel; at a temperature of 30 °C, the other constituents were slowly added. Due to the exothermic reaction, the temperature rose to about 40 °C which temperature was kept constant until the hydroxyl groups were completely consumed.

### Example 2

2262 g of an aqueous dispersion of a waterborne acrylic modified alkyd resin having an oil length of 58 % and a mass fraction of solids of 42 %, an acid value of 45 mg/g and a viscosity at room temperature of 1200 mPa^{.}s were blended with a diamine according to the ratios given in table 2. The dispersion was then stirred at 100 min⁻¹ for thirty minutes at 30 °C. Isocyanate functional precursors as detailed in table 1 were then added, and the reaction mixture was (300 min⁻¹) stirred at 30 °C for another hour. By addition of water, the mass fraction of solids was again adjusted to 42 %. Thixotropic dispersions of waterborne alkyd resins were obtained.

**Table 2 Thixotropic Alkyd Resin Dispersions**

| | | | | | | |
|---|---|---|---|---|---|---|
| Dispersion | 2.1 | 2.2 | 2.3 | 2.4 | 2.5 | Comparison |
| Hexamethylene Diamine (mass in g) | | 6.6 | 4.0 | 8.2 | | |
| m-Xylylene Diamine (mass in g) | 9.6 | | | | 10.3 | |
| Isocyanate Functional Intermediate of Table 1 | 1a | 1b | 1c | 1d | 1e | |
| mass in g | 40.4 | 43.4 | 46.0 | 41.8 | 39.7 | - |
| mass of thixotropy agent in g | 50.0 | 50.0 | 50.0 | 50.0 | 50.0 | 0 |
| Viscosity* at 1s⁻¹ | 11400 | 49500 | 8900 | 35300 | 42400 | 3700 |
| Viscosity* at 10 s⁻¹ | 6200 | 18200 | 4700 | 12200 | 16600 | 1400 |
| Viscosity* at 100 s⁻¹ | 1800 | 2400 | 1650 | 1950 | 2200 | 1050 |

| | | | | | | |
|---|---|---|---|---|---|---|
| * dynamical viscosity in mPa·s measured in each case at 23 °C on an aqueous dispersion at the shear gradient indicated | | | | | | |

The advantage of this thixotropy agent in comparison of those of the state of the art (cf. EP 1 264 861 = DE 101 27 287) is that much higher amounts of thixotropy agent can be used without the risk of crystallisation of these modifiers. Moreover, while compositions of the prior art proved to be unstable under strong shear, especially during pumping, it has been found, surprisingly, that the thixotropic compositions according to this invention show unimpaired recovery of their thixotropic properties after strong shear.

## Claims

1. A thixotropy agent for use in water borne resins compositions which comprises moieties derived from
**B1** olefinically unsaturated monohydroxy compounds,
**B2** polyfunctional isocyanates,
**B3** aliphatic polyether polyols,
**B4** aliphatic polyamines, and optionally,
**B5** saturated aliphatic monohydroxy compounds.

2. The thixotropy agent of claim 1, wherein the moieties derived from components **B2** and **B3** are connected in a way that at least two urethane linkages are formed for each molecule of **B3.**

3. The thixotropy agent of claim 1, wherein the ratio of the amount of substance of amino groups in **B4** the amount of substance of isocyanate groups in **B2** is from 0.3 mol/mol to 0.7 mol/mol.

4. The thixotropy agent of claim 1, wherein the ratio of the amount of substance of hydroxyl groups in **B3** to the amount of substance of isocyanate groups in **B2** is from 0.2 mol/mol to 0.4 mol/mol.

5. The thixotropy agent of claim 1, wherein the ratio of the amount of substance of hydroxyl groups in **B1** to the amount of substance of isocyanate groups in **B2** is from 0.1 mol/mol to 0.35 mol/mol.

6. A process for the production of the thixotropy agent of claim 1 which comprises the steps of
- preparing a mixture of **B1,** and **B3,** and optionally, **B5,**
wherein the composition of the mixture is such that in the sum of the amounts of substance of hydroxyl groups in **B1, B3,** and **B5,** the amount-of-substance fraction of hydroxyl groups of **B1** is from 0.25 mol/mol to 0.7 mol/mol, the amount-of-substance fraction of hydroxyl groups of **B3** is from 0.3 mol/mol to 0.75 mol/mol, and the amount-of-substance fraction of hydroxyl groups of **B5** is from 0 mol/mol to 0.3 mol/mol,
- adding this mixture to component **B2**,
to form an isocyanate functional intermediate, and
- reacting the aliphatic polyamines **B4** with this mixture.

7. A process for the production of the thixotropy agent of claim 1 which comprises the steps of
- adding component **B1**, and optionally, component **B5,** to component **B2,** under formation of an addition product containing urethane groups,
- adding thereto component **B3,** under formation of an addition product containing urethane groups,
wherein the amounts of **B1, B3,** and **B5** are chosen in a way that in the sum of the amounts of substance of hydroxyl groups in **B1, B3,** and **B5,** the amount-of-substance fraction of hydroxyl groups of **B1** is from 0.25 mol/mol to 0.7 mol/mol, the amount-of-substance fraction of hydroxyl groups of **B3** is from 0.30 mol/mol to 0.75 mol/mol, and the amount-of-substance fraction of hydroxyl groups of **B5** is from 0 mol/mol to 0.3 mol/mol, and
- reacting the aliphatic polyamines **B4** with the mixture of reaction products formed in the second step.

8. The process of claim 6, wherein the last step is conducted in the presence of an aqueous dispersion of a water-reducible resin selected from the group consisting of alkyd resins, acrylic resins, polyester resins, polyurethane resins, and epoxy resins.

9. The process of claim 7, wherein the last step is conducted in the presence of an aqueous dispersion of a water-reducible resin selected from the group consisting of alkyd resins, acrylic resins, polyester resins, polyurethane resins, and epoxy resins.

10. A waterborne resin system comprising the thixotropy agent of claim 1 and a water-reducible resin selected from the group consisting of alkyd resins, acrylic resins, polyester resins, polyurethane resins, and epoxy resins.
